# EUROPÄISCHE PATENTSCHRIFT

(11) **EP 0 657 646 B1**
(45) Veröffentlichungstag und Bekanntmachung des Hinweises auf die Patenterteilung: **02.01.1997**
(21) Anmeldenummer: 94115734.9
(22) Anmeldetag: 06.10.1994
(51) Int. Cl.: F03D 1/06

(54) **Rotorblatt für Windkraftanlagen**
Rotor blade for wind turbine
Pale de rotor pour éolienne

(30) Priorität: 15.10.1993 DE 4335221
(43) Veröffentlichungstag der Anmeldung: 14.06.1995
(73) Patentinhaber: Deutsche Forschungsanstalt für Luft- und Raumfahrt e.V., 51147 Köln (DE)
(72) Erfinder: Herrmann, Axel, D-31228 Peine (DE); Pabsch, Arno, D-38110 Braunschweig (DE); Krajenski, Volker, D-38118 Braunschweig (DE)
(74) Vertreter: Einsel, Martin, Dipl.-Phys.

(56) Entgegenhaltungen:
- EP-A- 0 057 272
- DE-A- 1 952 520
- DE-A- 2 611 235
- DE-A- 3 014 347
- DE-A- 3 114 567
- FR-A- 2 321 997
- GB-A- 2 164 618
- US-A- 3 943 020
- US-A- 4 260 332

## Beschreibung

Die vorliegende Erfindung bezieht sich auf Rotorblätter aus faserverstärkten Kunstharzen, insbesondere Rotorblättern für Windkraftanlagen, und ein Verfahren zur Herstellung solcher Rotorblätter.

Rotorblätter aus faserverstärkten Kunstharzen werden üblicherweise aus zwei Rotorblattschalen zusammengesetzt, die im Handauflegeverfahren in einer Negativform laminiert werden. Dabei werden entsprechend der jeweiligen Größe der Rotorblätter Holmelemente eingebaut, die jeweils in der Trennebene der beiden Rotorblattschale ebenfalls getrennt sind. Derartige Holme können dabei als Metallkonstruktionen ausgebildet sein. Es ist dabei auch bekannt, die Flügelblattschalen wenigstens teilweise mit einem Schaumstoff auszuschäumen, der in der Trennebene der Flügelblattschalen glatt geschliffen ist. Die so ausgebildeten Flügelblattschalen werden durch Verkleben miteinander verbunden. (DE-26 11 235 A1; DE-30 14 347 A1). In der beschriebenen Weise aufgebaute Rotorblätter sind einmal aufwendig in der Herstellung. Darüberhinaus sind die innenliegenden Klebungen, über die die beiden Rotorblattschalen miteinander verbunden sind, schwer zu kontrollieren.

Bekannt ist weiter ein Rotorblatt mit einer gesonderten Blattwurzel mit einer schaumkerngestützten Schale aus faserverstärktem Kunstharz. Der Schaumkern besteht aus Schaumstoffblöcken, die aus einzelnen Blöcken montiert sind. Die Rotorblattwurzel weist eine auf einem in eine Wickelmaschine einspannbaren Dorn gewickelte innenliegende Kreuzwicklung auf, auf die Schaumstoffblöcke aufgeklebt sind, die einen Stützkern für einen Rotorblattholm bilden. Auf diesen Stützkern sind in Kernlängsrichtung Laminate aus sich in Kernlängsrichtung erstreckenden Unidirektionalfasern aufgebracht. Über diesem Faserlaminat ist eine im Wickelverfahren aufgetragene Kreuzwicklung angebracht. An den so ausgebildeten Holm sind Schaumstoffüllstücke angeklebt, die die Kernvorder- und Kernhinterkante des Blattprofils bilden. Die Blattschale ist darüber als Kreuzwicklung aufgebracht (DE-OS 31 14 567 A1, US-PS 4,494,910). Bei der Herstellung wird nach dem Aufbringen und Aushärten der Rotorblattschale der Kern aus dem Rotorblatt herausgezogen, der bei der Herstellung benötigt wird, um ein Durchbiegen des Rotorblattes in der Wickelmaschine zu verhindern.

Gegenstand der Erfindung ist ein Rotorblatt, das auch bei großen Abmessungen in einer Wickelmaschine kernlos in einem weitgehend automatisierbaren Verfahren herstellbar ist.

Ein Rotorblatt aus faserverstärkten Kunstharzen für Windkraftanlagen weist gemäß der vorliegenden Erfindung folgende Elemente auf:
- einen mehrteiligen Formkern, der ein mittleres Holmelement und ein vorderes und ein hinteres an das Holmelement angesetztes Profilelement aufweist,
- eine an der Ober- und Unterseite in Richtung der Holmlängsachse angeordnete unidirektionale Faserlage, in der sich wenigstens ein Teil der unidirektionalen Faserlagen über die gesamte Länge des Rotorblattes erstreckt,
- ein am Fußende des Rotorblattes angeordnetes metallisches Befestigungselement für das Rotorblatt, über das die unidirektionale Faserwicklung so herum gelegt ist, daß das Holmelement über die unidirektionale Faserwicklung mit dem Befestigungselement biegesteif verbunden ist,
- eine auf der unidirektionalen Faserlage aufliegenden Kreuzwicklung,
- eine über den gesamten Formkern mit dem Holmelement und den daran angesetzten vorderen und hinteren Profilelementen abgelegten Kreuzwicklung als Rotorblattschale.

Zweckmäßig ist es, auf dem Holmelement des Formkerns eine erste aus wenigen Fasern bestehende Lage unidirektionaler Fasern anzuordnen, die sich über die gesamte Länge des Holmelementes erstrecken, und auf dieser ersten Lage eine innere Kreuzwicklung anzuordnen, auf der die weiteren Fasern der unidirektionalen Faserlage aufliegen.

An der Rotorblattspitze kann ein metallisches Einsatzelement durch die unidirektionale Faserlage in das Rotorblatt eingebunden sein.

Bei Rotorblättern mit großer Länge kann das Holmelement in Längsrichtung gestuft und mit wenigstens einer Querschulter ausgebildet sein, so daß ein Teil der unidirektionalen Faserwicklung über das Befestigungselement am Fußende des Rotorblattes über die wenigstens eine Querschulter gewickelt ist.

Das Befestigungselement kann mit wenigstens einer quer zur Holmlängsachse verlaufenden Bohrung und einer zur Bohrungsachse rotationssymmetrisch ausgebildeten Wickelschulter ausgebildet sein.

Am Fußende des Rotorblattes kann als Befestigungselement auch ein Befestigungsflansch mit zur Holmachse parallelen Befestigungsbolzen angeordnet sein, über die die unidirektionalen Fasern gewikkelt sind, für deren Schutz ein Abdeckflansch vorgesehen sein kann.

Auf der Blattoberfläche ist vorzugsweise eine thermoplastische Folie angeordnet, die mit dem Kunstharz vollflächig verbunden ist.

Die Elemente des Formkerns können aus einem drucksteifen Schaumstoff bestehen, aber auch als Hohlkörper ausgebildet sein, insbesondere als aufblasbare Hohlkörper.

Ein Verfahren zur Herstellung von Rotorblättern gemäß der Erfindung beinhaltet die Verwendung einer Wickelmaschine mit
- zwei entgegengesetzt angeordneten miteinander fluchtenden Spannköpfen, die mit einem Synchronantrieb versehen sind,
- einer Halterung für die drehfeste Halterung des Befestigungselementes in einem der Spannköpfe,
- drehfest in dem gegenüberliegenden Spannkopf gehalterte Mittel zum Umlenken der Fasern,
- Mittel zum Erzeugen einer Zugkraft in Achsrichtung der Spannköpfe,
und beinhaltet weiter die Verfahrensschritte
- Herstellung einer aus wenigen unidirektionalen Fasersträngen bestehenden Haltewicklung zwischen dem Befestigungselement und den gegenüberliegenden Umlenkmitteln,
- Einsetzen des Holmelementes zwischen die Stränge der Haltewicklung,
- Aufbringen einer Zugspannung auf die Fasern der Haltewicklung in einer solchen Größe, daß der Holmteil von den Strängen der Haltewicklung ohne Durchhang gehaltert wird,
- Aufbringen weiterer Wickelstränge zur Komplettierung der unidirektionalen Faserwicklung,
- Aufbringen einer Kreuzwicklung auf die unidirektionale Faserwicklung unter Drehung der Spannköpfe,
- Ansetzen der vorderen und hinteren Profilelemente,
- Aufbringen einer äußeren Kreuzwicklung unter Drehung der Spannköpfe,
- Lösen des gewickelten Rotorblattes und Absenken in ein erstes starres Formteil einer Form, die das Profil des fertigen Rotorblattes definiert,
- Schließen einer Form durch ein zweites starres Formteil,
- Pressen des Rotorblattes zwischen den Formteilen und
- Aushärten des Rotorblattes in der Form.

Dabei wird nach dem Aufbringen der Zugspannung auf die Haltewicklung aus unidirektionalen Fasern nach Einfügen des Holmelementes vorzugsweise eine erste innere Kreuzwicklung aufgebracht.

Als Umlenkmittel an der Blattspitze kann eine quer zur Drehachse liegende Wickelschulter oder aber auch eine Wickelkrone verwendet werden.

Aufgabe der Erfindung ist ein Rotorblatt aus faserverstärkten Kunstharzen, das in einem weitgehend automatisierbaren Fertigungsverfahren herstellbar ist und wesentliche Nachteile der bekannten Rotorblätter vermeidet.

Diese Aufgabe wird gemäß der Erfindung gelöst durch die im Patentanspruch 1 herausgestellten Merkmale.

Zweckmäßige Ausgestaltungen solcher Rotorblätter und ein Verfahren zu ihrer Herstellung sind Gegenstand der Unteransprüche.

Die Erfindung ist in der Zeichnung beispielsweise veranschaulicht und im nachstehenden im einzelnen anhand der Zeichnung beschrieben. Es zeigen jeweils schematisch:
Figur 1 in Draufsicht einen Formkern eines Rotorblattes gemäß der Erfindung;
Figur 2 eine Ausführung eines Holmelementes mit Umlenk- und/oder Befestigungselementen;
Figur 3 das Holmelement mit einer unidirektionalen Wicklung und einer darauf aufgebrachten Kreuzwicklung;
Figur 4 das Holmelement nach Figur 3 mit daran angesetztem vorderen und hinterem Profilelement;
Figur 5 das fertig gewickelte Rotorblatt;
Figur 6 einen Blattfuß mit einem Flanschring als Umlenk- und Befestigungselement;
Figur 7 eine Wickelmaschine zur Herstellung des Rotorblattes;
Figur 8 - 11 Verfahrensschritte bei der Herstellung des Rotorblattes;
Figur 12 die Herstellung eines Rotorblattes ohne eingebundes Endelement an der Blattspitze.

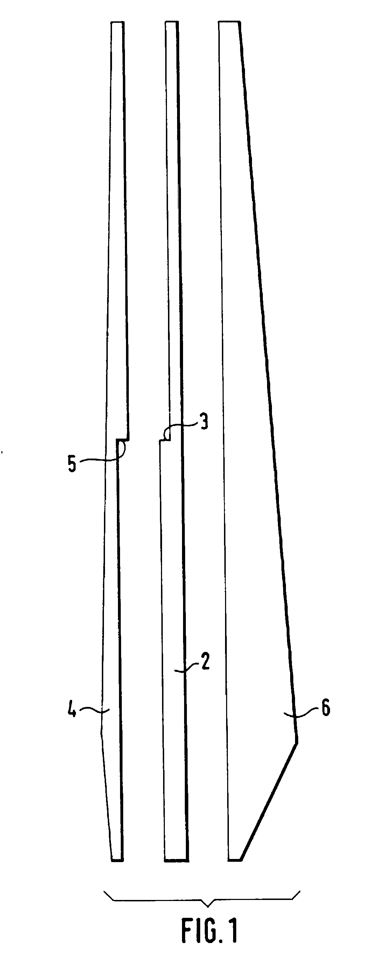

Ein Rotorblatt gemäß der Erfindung weist einen Formkern auf, der der Kontur des fertigen Rotorblattes entspricht. Der Formkern ist in drei Elemente geteilt, die in Fig.1 dargestellt sind. Diese Teile sind ein Holmelement 2, ein vorderes Profilelement 4 und ein hinteres Profilelement 6. Das Profilelement 4 bildet dabei die Profilnase, das Profilelement 6 den nachlaufenden Profilabschnitt.

Die drei Elemente 2, 4, 6 des Formkerns können aus einem druckfesten Schaumstoff, beispielsweise geschäumtem Polystyrol oder Polyurethanschaum bestehen. Der Schaumstoff sollte eine geschlossene Oberfläche haben. Die Elemente 2, 4, 6 des Formkerns können auch als Hohlkörper ausgebildet sein, die in bekannter Weise als geblasene Hohlkörper ausgebildet sein können. Bei großen Abmessungen empfiehlt sich die Herstellung im Sintergußverfahren, vorzugsweise im Taumelsinterverfahren. Als Werkstoff können dabei in bekannter Weise Polyamid, Polypropylen, auch Polystyrol verwendet werden. Die Form und die Abmessungen des Formkerns entsprechen der Form des fertigen Rotorblattes abzüglich der Dicke der Rotorblatthaut. Für die Herstellung des Rotorblattes nach dem weiter unten beschriebenen Verfahren brauchen die Elemente des Formkerns nur eine geringe Biegesteifigkeit zu haben. Sie können in Längsrichtung auch geteilt sein.

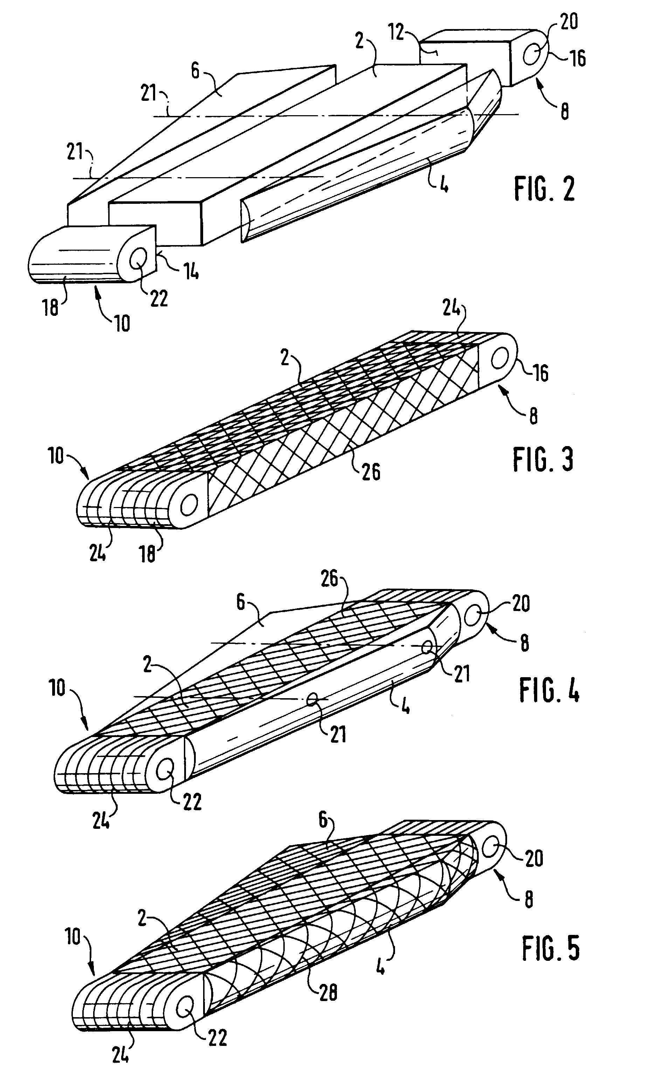

Das Holmelement 2 ist in Fig.2 schematisch als Quader dargestellt. An den Enden des Holmelementes 2 ist jeweils ein Endelement 8, 10 dargestellt, das eine ebene Fläche 12, 14 aufweist. Mit diesen Flächen können die beiden Endelemente 8 und 10 an ebenen Endflächen des Holmelementess 2 des Formkerns anliegen. Die Endelemente 8, 10 haben jeweils eine gerundete Schulter 16 bzw. 18 und bei dem Ausführungsbeispiel jeweils Bohrungen 20, die quer zur Längserstreckung des Holmelementes 2 liegen. Das Endelement 10 am Fuß des Rotorblattes, das als Befestigungselement zur Befestigung des Rotorblattes an der Rotornabe ausgebildet ist, kann auch mit einer Mehrzahl von Querbohrungen versehen sein. Die Endelemente 8, 10 bestehen vorzugsweise aus Metall. Die dem Holmelement 2 Zugewandten Flächen der Endelemente können auch gekrümmt ausgebildet sein, wie in Figur 2 gestrichelt dargestellt. Die Endelemente kön nen beispielsweise als Drehteile gefertigt sein. In Fig.2 sind weiter die beiden Profilelemente 4 und 6 dargestellt, die an das Holmelement zur Komplettierung des Formkerns anzufügen sind.

Über die Endelemente 8 und 10 und das zwischen den Endelementen angeordnete Holmelement 2 ist, wie in Fig.3 dargestellt, eine Wicklung 24 aus unidirektionalen Fasern gewickelt, die sich in Längsrichtung des Holmelementes 2 erstreckt und jeweils über die gerundeten Schultern 16, 18 der Endelemente herumgeführt ist. Ober der Wicklung 24 ist auf dem Holmelement 2 eine Kreuzwicklung 26 angeordnet.

Die Wicklung 24, deren Stränge durch das Holmelement 2 in einem durch dessen Dicke vorgegebenen Abstand voneinander gehalten werden, gibt dem Rotorblatt die geforderte Biegesteifigkeit, während die Kreuzwicklung 26 die Torsionssteifigkeit des Holmelementes 2 bestimmt. Zur Verbesserung der Schubankopplung kann unter der Wicklung 24 eine erste in der Zeichnung nicht dargestellte Kreuzwicklung vorgesehen werden.

Bei Rotorblättern großer Länge, beispielsweise einer Länge größer als 5 m ist es nicht notwendig, die gesamte Wicklung aus unidirektionalen Fasern über die gesamte Länge des Holmelementes 2 zu führen. Das Holmelement 2 kann dann, wie in Fig.1 dargestellt, mit einer, aber auch mit mehreren Stufen 3 mit sich quer zur Längsachse des Rotorblattes erstreckenden Umlenkschultern ausgebildet sein, über die der entsprechende Anteil der Wicklung aus unidirektionalen Fasern herumgewickelt ist. Wie in Fig.1 dargestellt, ist die Rückseite des Profilelementes 4 bei einer solchen Ausbildung des Holmelementes mit einer der Stufe 3 entsprechenden Stufe 5 versehen.

An das Holmelement 2 mit seiner Längswicklung 24 und der Kreuzwicklung 26 sind das vordere und hintere Profilelement 4, 6 angesetzt, wobei Querstifte 21 oder dergleichen vorgesehen sein können, mit denen die genaue Lage der drei Elemente 2, 4, 6 des Formkerns relativ zueinander bestimmt wird. Das in der oben beschriebenen Weise bewickelte Holmelement 2 und die daran angesetzten vorderen und hinteren Profilelemente 4 und 6 bilden den Wickelkern für die Rotorblatthaut.

Die Rotorblatthaut ist, wie in Fig.5 dargestellt, durch eine Kreuzwicklung 28 gebildet, die um den Wickelkern, wie er in Fig.4 dargestellt ist, herumgewickelt ist.

Das Holmelement 2 ist in den Fig.2 bis 5 stark verkürzt schematisch als Quader dargestellt. Er kann selbstverständlich an seiner Ober- und Unterseite entsprechend dem Blattprofil gekrümmt und am Fuß des Blattes auch in einen Abschnitt mit rundem Querschnitt auslaufen, abhängig von der Form des Befestigungselementes.

Die Oberfläche des Rotorblattes ist glatt ausgebildet und auf ihrer Oberfläche eingefärbt, beispielsweise lackiert. Die Oberfläche ist vorzugsweise durch eine fest mit der Oberfläche der Kreuzwicklung 28 verbundene thermoplastische Folie gebildet, die in der gewünschten Farbe, vorzugsweise weiß, eingefärbt ist und damit gleichzeitig die Farbgebung des Flügels bewirkt.

Das Rotorblatt, wie es im vorstehenden beschrieben ist, zeichnet sich dadurch aus, daß die bei konventionell aufgebauten Rotorblättern üblichen sicherheitskritischen Klebungen entfallen. Die Rotorblätter haben weiter den Vorteil eines sehr geringen Gewichtes. Durch den Formkern, auf dem die Blatthaut vollflächig aufliegt, hat das Rotorblatt eine hohe Beulfestigkeit. Es ist weiter eine weitgehend automatisierbare Fertigung auf Wickelmaschinen möglich.

Für das Endelement 8 an der Blattspitze, das durch die Wicklung 24 in das Rotorblatt eingebunden ist, kann durchaus eine gewisse Masse erwünscht sein. Das Endelement 8 kann dann zum Auswuchten des Flügels verwendet werden, indem sein Gewicht durch Ausbohren oder Zufügen von Ausgleichsmassen angepaßt wird. Außerdem kann es bei kurzen und somit sehr leichten Flügeln sinnvoll sein, durch ein größeres Gewicht an der Blattspitze bei nur geringer Gewichtszunahme des Rotorblattes die Rotationsträgheit des Flügels stark zu erhöhen. Dadurch ist es möglich, die Drehzahl einer Windkraftanlage bei geringen Schwankungen der Windgeschwindigkeit konstant zu halten.

Wenn eine gewisse Masse an der Blattspitze, die durch das im vorstehenden beschriebene metallische Umlenkelement 8 gegeben ist, nicht erforderlich oder erwünscht ist, kann auf ein solches in das Rotorblatt eingebundene Endelement auch verzichtet werden. Die Fasern der sich in Längsrichtung des Holmelementes erstreckenden Unidirektionalwicklung enden dann an der Blattspitze des Rotorblattes.

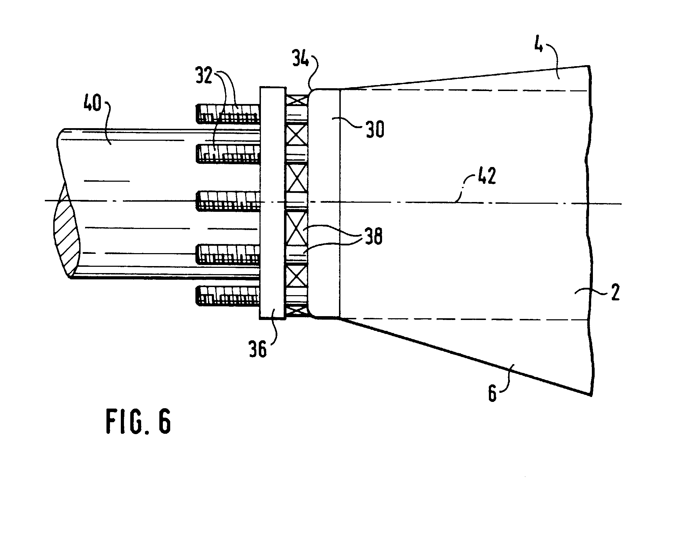

Am Blattfuß kann als Befestigungselement für das Rotorblatt auch eine Flanschbefestigung in die Unidirektionalwicklung 24 eingebunden sein, wie er in Fig.6 dargestellt ist. Hier ist am Fußende des Holmelementes 2 ein Flanschring 30 angeordnet, der mit untereinander und zur Längsachse 42 des Rotorblattes achsparallelen Befestigungsbolzen 32 versehen ist. Die vom Rotorblatt abgewandte äußere Kante 34, über die die Fasern geführt sind, ist gerundet. Beim Wickeln können die unidirektionalen Fasern dann um diese Befestigungsbolzen herumgelegt und umgelenkt werden. Ein solcher Flanschring ist beispielsweise erforderlich, wenn die Rotorblätter an Naben mit Verstellgetriebe zu befestigen sind. Zum Schutz der über den Flanschring 32 gelegten Fasern 38 ist ein vorzugsweise ringförmiger Abdeckflansch 36 vorgesehen, der nach Fertigstellung der Wicklung an den auf dem Flanschring aufliegenden Fasern 38 zur Anlage gebracht wird. Der Flanschring 30 ist lösbar an einem Achsbolzen 40 befestigt, mit dem er in eine Wickelmaschine einspannbar ist, wie weiter unten beschrieben wird.

Das Holmelement des Formkerns, wie es oben beschrieben ist, hat keine für ein Wickelverfahren ausreichende Biegesteifigkeit. Es muß also während der Herstellung des Rotorblattes in gestreckter Lage gehalten werden. Im nachstehenden wird ein Verfahren zur kernlosen Fertigung von Rotorblättern gemäß der Erfindung auf einer üblichen Wickelmaschine beschrieben.

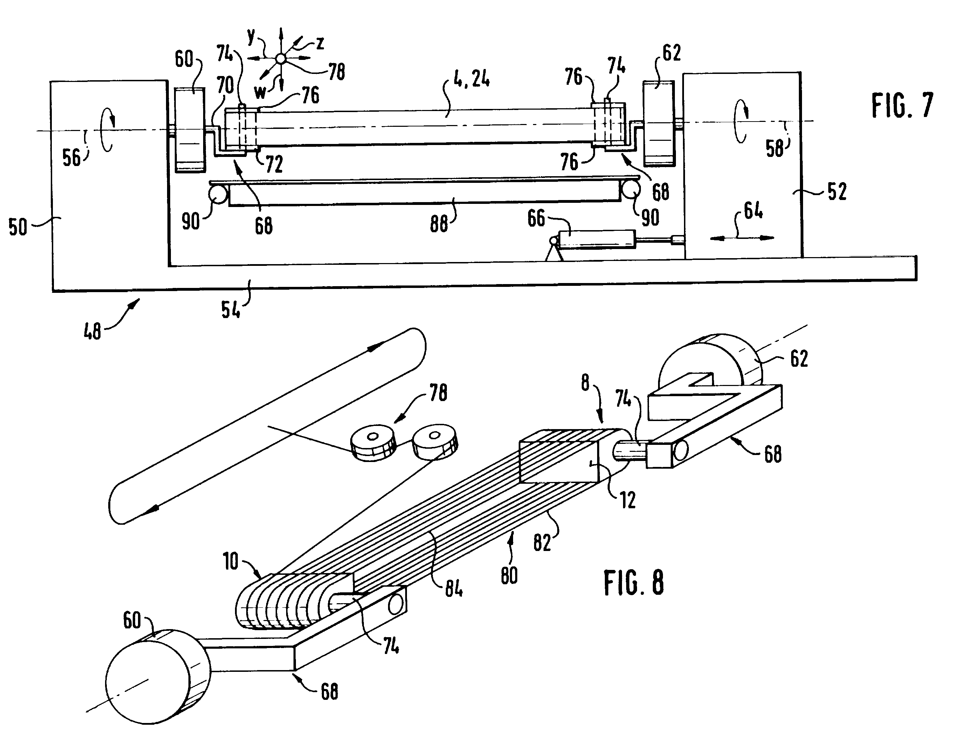

In Fig.7 ist schematisch eine Wickelmaschine 48 dargestellt. In zwei Gehäusen 50, 52, die im Abstand voneinander auf einem gemeinsamen Bett 54 angeordnet sind, sind jeweils um koaxiale Achsen 56, 58 drehbar Spannköpfe 60, 62 vorgesehen. Diese Spannköpfe sind in bekannter Weise synchron antreibbar. Einzelheiten brauchen hier nicht beschrieben zu werden.

Das Gehäuse 52 ist auf dem Bett 54 in Achsrichtung verstellbar angeordnet, wie durch den Doppelpfeil 64 angedeutet. Für die Verstellung ist ein Verstellantrieb vorgesehen, der hier als Hydraulikantrieb 66 schematisch dargestellt ist, der einerseits am Maschinenbett 54 und andererseits an dem verstellbaren Gehäuse 52 angelenkt ist.

Zur Aufnahme der Endelemente 8, 10 des Rotorblattes sind abgekröpfte Halterungen 68 vorgesehen, die mit einem Achsschenkel 70 in den Spannköpfen 60, 62 drehfest und axial belastbar eingespannt sind. Die Halterungen 68 hatten am Ende ihrer Kröpfung 72 einen Tragschenkel 74, der sich quer zur Drehachse 58 erstreckt. Auf diese Tragschenkel 74 sind die Endelemente 8, 10 aufgesteckt und entsprechend der aufzubringenden Wicklung relativ zueinander fixiert. Beidseitig der Endelemente 8, 10 sind den Wickelraum definierende Scheiben 76 auf den Tragschenkeln 74 angebracht.

Die in üblicher Weise ausgebildete Fadenführung ist hier durch das Fadenauge 78 symbolisiert, das in drei Richtungen verstellbar ist, und zwar in y-Richtung, die parallel zur Drehachse 56, 58 in deren Längsrichtung verläuft, sowie quer zur Drehachse in senkrechter w-Richtung und horizontaler z-Richtung. Mit diesen drei Bewegungsrichtungen können alle Bewegungen des Fadenauges, die für die Herstellung der Wicklungen erforderlich sind, verwirklicht werden. Der Abstand zwischen dem Tragschenkel 74 und dem an den Achsschenkel 70 angrenzenden Schenkel der Kröpfung ist so zu wählen, daß ein ausreichender Raum für die Fadenführung beim Wickeln vorhanden ist.

Im nachstehenden wird ein unter Verwendung einer Wickelmaschine mit den beschriebenen Merkmalen durchführbares Verfahren zur Herstellung von Rotorblättern gemäß der Erfindung beschrieben.

Wie in Fig.8 veranschaulicht, wird über die im entsprechenden Abstand auf den Halterungen 68 angeordneten Endelemente 8, 10 zunächst eine unidirektionale Haltewicklung 80 mit wenigstens zwei im Abstand voneinander liegenden Wickelschleifen mit jeweils im Abstand übereinander liegenden Fasersträngen 82,84 aufgebracht.

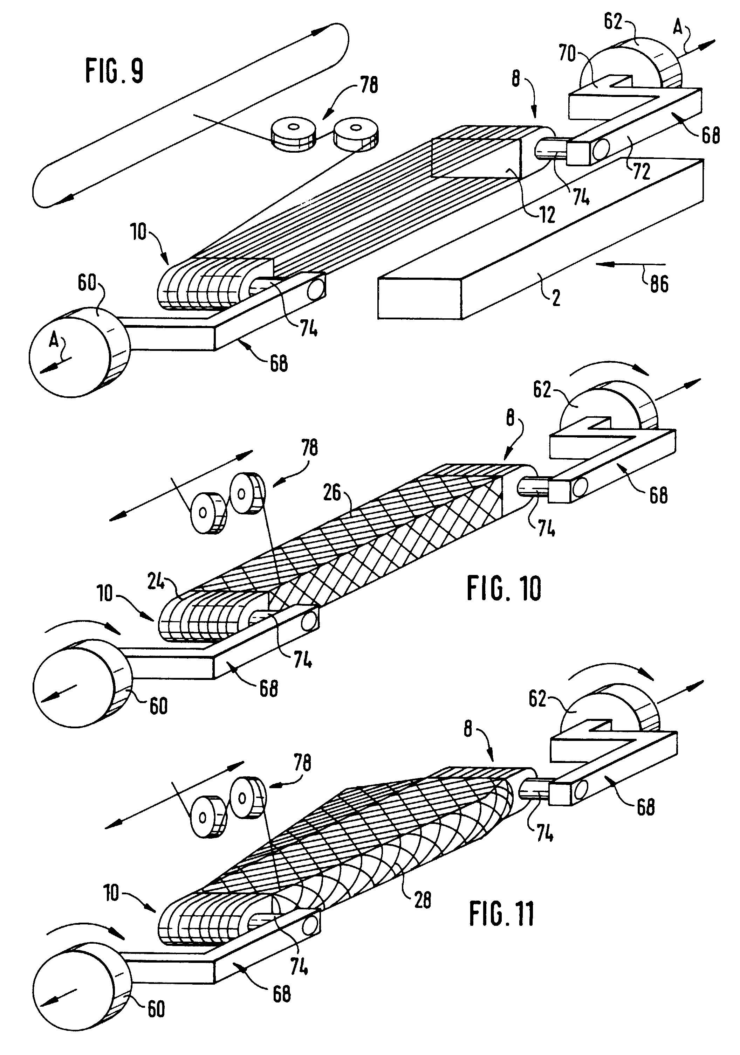

Nach dem Aufbringen dieser Haltewicklung 80 wird diese - wie durch die Pfeile A angedeutet - unter Vorspannung gesetzt, beispielsweise über den Verstellantrieb 66. Zwischen die unter Vorspannung gehaltenen Faserstränge 78, 80 der Haltewicklung 80 wird von der Seite in Richtung des Pfeiles 86 das Holmelement 2 eingeschoben, wie in Fig.9 veranschaulicht. Die Vorspannung wird so gewählt bzw. nach dem Einschieben des Holmelementes soweit erhöht, daß das Holmelement durch die Faserstränge 82, 84 ohne Durchhang in gestreckter Lage gehalten wird.

Nach dem Einfügen des Holmelementes 2 zwischen die Stränge der Haltewicklung wird die sich in Längsrichtung des Holmteiles 84 erstreckende Wicklung 24 aus unidirektionalen Fasern fertiggewickelt. Zur Verbesserung der Schubankopplung kann auf die Haltewicklung nach dem Einschieben des Holmelementes 2 zunächst noch eine innere Kreuzwicklung aufgebracht werden. Zum Aufbringen der inneren Kreuzwicklung wird das Holmelement um die Drehachsen 56, 58 gedreht.

Nach Fertigstellung der Wicklung 24 aus unidirektionalen Fasern wird, wie in Figur 10 veranschaulicht, die Kreuzwicklung 26 aufgebracht und dabei das Holmelement um die Achse 56, 58 gedreht. Nach Fertigstellung der Kreuzwicklung 26 werden auf die in Fig .5 dargestellten Querstifte 21 im Holmelement 2 das vordere und hintere Profilelement 4, 6 angesetzt. Im Anschluß daran wird dann die die Rotorblatthaut bildende Kreuzwicklung 28 aufgebracht, wie in Fig.11 schematisch dargestellt.

Die Vorspannung bleibt bis zur Fertigstellung der Kreuzwicklung 28 aufrechterhalten. Sie beeinflußt jedoch nicht die Spannung in den Wickelsträngen der Unidirektionalwicklung, die nach Erreichen des Endwertes für die Vorspannung in der Haltewicklung 80 gewickelt werden. Die Vorspannung kann jedoch nach Fertigstellung der Unidirektionalwicklung zur Streckung der Faser kurzzeitig noch weiter erhöht werden.

Nach Fertigstellung der äußeren Kreuzwicklung 28 wird die Vorspannung aufgehoben und das Rotorblatt mit seinen Endstücken 8 und 10 von den Tragschenkeln 74 der Halterungen 68 abgenommen und in das Unterteil 88 einer in der Blattebene geteilten zweiteiligen Form 86 abgelegt. Das Formunterteil 86 wird zu diesem Zweck vorzugsweise unmittelbar unterhalb des in der oben beschriebenen Weise gewickelten Rotorblattrohlings in die Wickelmaschine eingebracht und kann beispielsweise über entsprechende Führungsschienen 90 in die Wickelmaschine eingefahren werden.

In dem Formunterteil 88 gelangt der nach dem Wickeln noch labile Rotorblattrohling in seine endgültige gestreckte Lage. Die Form wird dann durch ein Formoberteil, das in der Zeichnung nicht dargestellt ist, geschlossen und der Rotorblattrohling in der Form gepreßt. Bei dieser Pressung werden die Faserlagen verdichtet. Dabei wird das Harz in freie Räume gepreßt und überschüssiges Harz ausgepreßt. Der Rotorblattrohling wird nach dem Pressen in der Form ausgehärtet und zu diesem Zweck vorzugsweise erwärmt. Die beiden Formteile sind vorzugsweise beheizbare Metallformen.

Insbesondere bei Rotorblättern großer Länge, z.B. länger als 12 Meter, kann das Pressen durch äußeren Druck auf die Form Schwierigkeiten bereiten und einen hohen Aufwand bedingen. In solchen Fällen sind als Hohlkörper ausgebildete, aufblasbare Kernelemente 2, 4, 6 vorteilhaft. Der Druck in der Form kann dann durch in die Hohlkörper eingeleitete Druckluft aufgebaut werden, durch die die Wicklungen von innen gegen die Formwandungen gepreßt werden.

Eine besonders geringe Oberflächenrauhigkeit ist erreichbar, wenn das Rotorblatt auf seiner Oberfläche mit einer thermoplastischen Folie beschichtet wird. Eine solche Folienbeschichtung kann in der Form erfolgen. Zu diesem Zweck wird in die Form mit einer entsprechend vorgeformten thermoplastische Folie ausgekleidet, die sich beim Aushärten fest mit dem Harz verbindet. Durch eine solche in die Form eingelegte Folie kann auf die Einbringung von Trennmitteln in die Form verzichtet werden. Die Folie kann ihrerseits in der gewünschten Farbe eingefärbt sein und damit die endgültige Farbgebung des Rotorblattes bestimmen, für das aus thermischen Gründen vorzugsweise weiß gewählt wird.

Rotorblätter der beschriebenen Art können mit vorgetränkten Fasern gewickelt werden. Es ist auch möglich, trocken zu wickeln und anschließend eine Tränkung der Wicklung mit dem Harz in bekannter Weise durchzuführen. Hierfür kann beispielsweise in der geschlossenen Form ein Unterdruck erzeugt und das Harz in die Form injiziert werden.

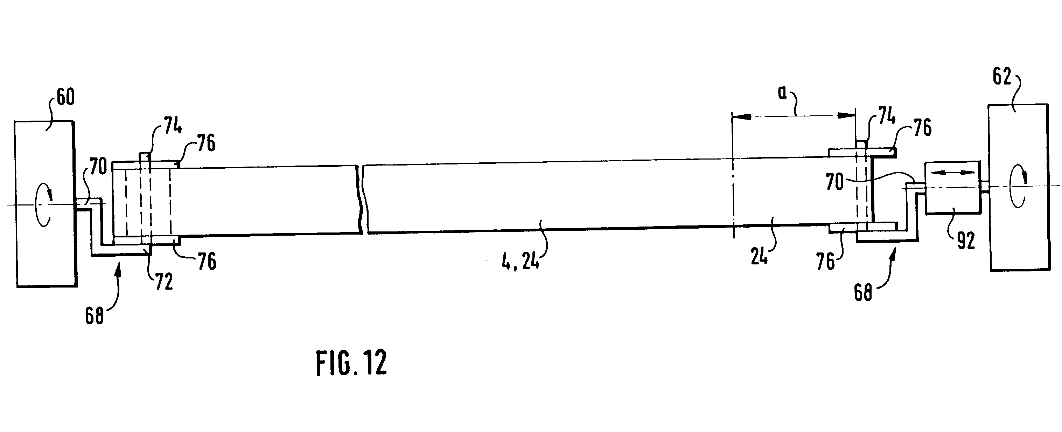

Wie oben erwähnt, kann das Rotorblatt auch ohne ein an der Rotorblattspitze eingebundenes metallisches Endelement ausgebildet sein. Dies ist insbesondere bei Rotorblättern größerer Länge der Fall. Im Bereich der Rotorblattspitze kann dann das Rotorblatt eine geringe Profilhöhe haben. In solchen Fällen kann, wie in Fig.12 dargestellt, die sich in Längsrichtung des Holmelementes erstreckende Unidirektionalwicklung 24 im Abstand a vom spitzen seitigen Ende des Holmelementes über den Tragschenkel 74 der Halterung 68 gewickelt werden. Entsprechend wird der Abstand zwischen den Tragschenkeln 74 der einander gegenüberliegenden Halterungen 68 eingestellt. Nach dem Ablegen im Formunterteil 85 wird der überstehende Wicklungsabschnitt 94 abgetrennt.

Die Fasern können in Form von Rovings oder Bändern gewickelt werden. Als Material können entsprechend den geforderten Festigkeitseigenschaften Glasfasern, Kohlenstoffasern, Siliziumkarbidfasern, aber auch andere bekannte hochfeste Fasern, verwendet werden.

Die Vorspannung der Haltewicklung 75 kann wie beschrieben über den Verstellantrieb 66 der Wickelmaschine aufgebracht werden. Es können aber auch Spannmittel an oder in einem der Spannköpfe vorgesehen werden. So können im Achsschenkel 70 einer der Halterungen 68 Spannmittel 92 integriert sein, wie in Figur 12 schematisch angedeutet. Diese Spannmittel können hydraulisch, mechanisch oder in sonstiger bekannter Weise betätigbar ausgebildet sein.

Anstelle einer Halterung 68 mit einem quer zur Drehachse 56, 58 liegenden Tragschenkel kann für die Faserumlenkung am spitzenseitigen Ende des Blattes auch eine an sich bekannte Wickelkrone vorgesehen werden, die ebenso wie der in Fig.6 dargestellte Flanschring 30 auf einem Achsbolzen befestigt sein kann, der in die Spannköpfe 60, 62 eingespannt wird. Bei der Ausführung nach Fig.6 hat der Achsbolzen 40 einen Durchmesser, der geringfügig kleiner ist als der Innendurchmesser des ringförmig ausgebildeten Abdeckflansches 36. Der Abdeckflansch 36 kann beim Wickeln im Abstand von den Enden der Befestigungsbolzen 32 auf dem Achsbolzen 40 festgelegt werden. Somit können die Fasern der Wicklung 24 über die Befestigungsbolzen hinweg in Anlage am Flanschring 30 gewickelt werden.

## Patentansprüche

1. Rotorblatt aus faserverstärkten Kunstharzen für Windkraftanlagen mit
- einem mehrteiligen Formkern, der ein mittleres Holmelement (2) und ein vorderes und ein hinteres an das Holmelement angesetztes Profilelement (4,6) aufweist,
- einer an der Ober- und Unterseite in Richtung der Holmlängsachse angeordneten unidirektionalen Faserlage (24), in der sich wenigstens ein Teil der unidirektionalen Faserlagen über die gesamte Länge des Rotorblattes erstreckt,
- einem am Fußende des Rotorblattes angeordneten metallischen Befestigungselement (10) für das Rotorblatt, über das die unidirektionale Faserwicklung so herum gelegt ist, daß das Holmelement über die unidirektionale Faserwicklung mit dem Befestigungselement biegesteif verbunden ist,
- einer auf der unidirektionalen Faserlage (24) aufliegenden Kreuzwicklung (26),
- einer über dem gesamten Formkern mit dem Holmelement (2) und den daran angesetzten vorderen und hinteren Profilelementen (4,6) angeordneten Kreuzwicklung (28) als Rotorblattschale.

2. Rotorblatt nach Anspruch 1, dadurch gekennzeichnet, daß auf dem Holmelement (2) des Formkerns eine erste aus wenigen Fasern bestehende Lage (84) unidirektionaler Fasern angeordnet ist, die sich über die gesamte Länge des Holmelementes erstrecken, und daß auf dieser ersten Lage eine innere Kreuzwicklung angeordnet ist, auf der die weiteren Fasern (24) der unidirektionalen Faserlage aufliegen.

3. Rotorblatt nach Anspruch 1, dadurch gekennzeichnet, daß an der Rotorblattspitze ein metallisches Einsatzelement (10) in das Rotorblatt eingebunden ist und daß wenigstens ein Teil der unidirektionalen Faserwicklung 24) über das Befestigungselement (8) am Fußende des Rotorblattes und das Einsatzelement (10) gewickelt ist.

4. Rotorblatt nach Anspruch 1, dadurch gekennzeichnet, daß das Holmelement (2) in Längsrichtung gestuft und mit wenigstens einer Querschulter (3) ausgebildet ist und daß ein Teil der unidirektionalen Faserwicklung über das Befestigungselement (8) am Fußende des Rotorblattes aus über die wenigstens eine Querschulter (3) gewickelt ist.

5. Rotorblatt nach Anspruch 1, dadurch gekennzeichnet, daß das Befestigungselement (8) mit wenigstens einer quer zur Holmlängsachse verlaufenden Bohrung (22) und einer zur Bohrungsachse rotationssymmetrisch ausgebildeten Wickelschulter (16) versehen ist.

6. Rotorblatt nach Anspruch 1, dadurch gekennzeichnet, daß am Fußende des Rotorblattes ein Befestigungsflansch (30) mit zur Holmachse (42) achsparallelen Befestigungsbolzen (32) angeordnet ist, über die die unidirektionalen Fasern gewickelt sind.

7. Rotorblatt nach Anspruch 5, dadurch gekennzeichnet, daß der Befestigungsflansch (30) mit gerundeten Schultern (34) ausgebildet ist, über die unidirektionale Fasern gewickelt sind, und daß ein Abdeckflansch (36) für die Wickellagen (38) auf dem Befestigungsflansch (30) vorgesehen ist.

8. Rotorblatt nach Anspruch 1, dadurch gekennzeichnet, daß die Blattoberfläche durch eine thermoplastische Folie abgedeckt ist, die mit dem Kunstharz vollflächig verbunden ist.

9. Rotorblatt nach Anspruch 1, dadurch gekennzeichnet, daß die Elemente (2,4,6) des Formkerns aus einem drucksteifen Schaumstoff bestehen.

10. Rotorblatt nach Anspruch 1, dadurch gekennzeichnet, daß die Elemente (2,4,6) des Formkerns als Hohlkörper ausgebildet sind.

11. Rotorblatt nach Anspruch 1, dadurch gekennzeichnet, daß die Hohlkörper aufblasbar ausgebildet sind.

12. Verfahren zur Herstellung von Rotorblättern nach einem der vorhergehenden Ansprüche,
beinhaltend
die Verwendung einer Wickelmaschine mit
- zwei entgegengesetzt angeordneten, miteinander fluchtenden Spannköpfen (60,62), die mit einem Synchronantrieb versehen sind,
- einer Halterung (68) für die drehfeste Halterung des Befestigungselementes (8) in einem der Spannköpfe,
- drehfest in dem gegenüberliegenden Spannkopf gehalterte Mittel (10,74) zum Umlenken der Fasern,
- Mittel (66,92) zum Erzeugen einer Zugkraft in Achsrichtung der Spannköpfe,
und weiter beinhaltend die Verfahrensschritte
- Herstellung einer aus wenigen unidirektionalen Fasersträngen (82,84) bestehenden Haltewicklung (80) zwischen dem Befestigungselement und den gegenüberliegenden Umlenkmitteln,
- Einsetzen des Holmelementes (2) zwischen die Stränge (82,84) der Haltewicklung,
- Aufbringen einer Zugspannung auf die Fasern der Haltewicklung in einer solchen Größe, daß das Holmelement von den Strängen der Haltewicklung ohne Durchhang gehaltert wird,
- Aufbringen weiterer Wickelstränge zur Komplettierung der unidirektionalen Faserwicklung (24),
- Aufbringen einer Kreuzwicklung (26) auf die unidirektionale Faserwicklung (24) unter Drehung der Spannköpfe,
- Ansetzen der vorderen und hinteren Profilelemente (4,6),
- Aufbringen einer äußeren Kreuzwicklung (28) unter Drehung der Spannköpfe,
- Lösen des gewickelten Rotorblattes und Absenken in ein erstes starres Formteil (88) einer Form, die das Profil des fertigen Rotorblattes definiert,
- Schließen einer Form durch ein zweites starres Formteil,
- Pressen des Rotorblattes zwischen den Formteilen und
- Aushärten des Rotorblattes in der Form.

13. Verfahren nach Anspruch 12, dadurch gekennzeichnet, daß nach dem Aufbringen der Zugspannung auf die Haltewicklung (80) aus unidirektionalen Fasern und Einsetzen des Holmelementes (2) zwischen die Stränge (82,84) der Haltewicklung eine erste innere Kreuzwicklung auf die Haltewicklung aufgebracht wird.

14. Verfahren nach Anspruch 12, gekennzeichnet durch die Verwendung einer quer zur Drehachse (56,58) liegenden Wickelschulter (74) als Umlenkmittel.

15. Verfahren nach Anspruch 12, gekennzeichnet durch die Verwendung einer Wickelkrone als Umlenkmittel.

16. Verfahren nach Anspruch 12, gekennzeichnet durch die Verwendung eines an der Blattspitze in das Rotorblatt einzubindenden metallischen Einsatzelementes (10) als Umlenkmittel.

17. Verfahren nach Anspruch 12, dadurch gekennzeichnet, daß der Abstand zwischen dem Befestigungselement (8) in dem einen Spannkopf (60) und den Umlenkmitteln in dem anderen Spannkopf (62) größer eingestellt wird als die Länge des Holmelementes (2).

18. Verfahren nach Anspruch 12, dadurch gekennzeichnet, daß als Befestigungselement ein Befestigungsflansch (30) mit zur Holmachse (42) achsparallelen Befestigungsbolzen (32) verwendet wird und die unidirektionalen Fasern über den Befestigungsflansch gewickelt und um die Befestigungsbolzen herum umgelenkt werden.

## Claims

1. A rotor blade made of fibre-reinforced synthetic resins for wind power plant, comprising
- a multi-part moulded core which has a central spar element (2) and a front and a rear profile element (4, 6) attached to the spar element,
- a unidirectional fibre layer (24) arranged at the top and underside in the direction of the longitudinal axis of the spar, wherein at least part of the unidirectional fibre layers extend over the whole length of the rotor blade,
- a metallic fastening member (10) for the rotor blade, which is arranged at the foot end of the blade and round which the unidirectional fibre wrapping is laid, in such a way that the spar element is joined rigidly to the fastening member by the unidirectional fibre wrapping,
- a cross-wrapping (26) lying on the unidirectional fibre layer (24), and
- a cross-wrapping (28) arranged over the whole moulded core with the spar element (2) and the front and rear profile elements (4, 6) attached to it, as the shell of the rotor blade.

2. The rotor blade of claim 1, characterised in that a first layer (84) of unidirectional fibres extending over the whole length of the spar element and comprising only a few fibres is arranged on the spar element (2) of the moulded core, and that an internal cross-wrapping is arranged on this first layer, on which cross-wrapping the other fibres (24) of the unidirectional fibre layer lie.

3. The rotor blade of claim 1, characterised in that a metallic insert element (10) is tied into the rotor blade at the tip of the blade, and that at least part of the unidirectional fibre wrapping (24) is wound over the fastening element (8) at the foot end of the rotor blade and over the insert element (10).

4. The rotor blade of claim 1, characterised in that the spar element (2) is stepped longitudinally and formed with at least one transverse shoulder (3), and that part of the unidirectional fibre wrapping is wound over the fastening member (8) at the foot end of the rotor blade via said at least one transverse shoulder (3).

5. The rotor blade of claim 1, characterised in that the fastening member (8) is provided with at least one hole (22) extending across the longitudinal axis of the spar, and a winding shoulder formed rotationally symmetrically with the axis of the hole.

6. The rotor blade of claim 1, characterised in that a fastening flange (30) is arranged at the foot end of the rotor blade, with fastening pins (32) axially parallel with the axis of the spar, over which pins the unidirectional fibres are wrapped.

7. The rotor blade of claim 5, characterised in that the fastening flange (30) is shaped with rounded shoulders (34), over which unidirectional fibres are wrapped, and that a covering flange (36) is provided for the wrapping layers (38) on the fastening flange (30).

8. The rotor blade of claim 1, characterised in that the blade surface is covered with a thermoplastic film which is joined to the whole area by the synthetic resin.

9. The rotor blade of claim 1, characterised in that the elements (2, 4, 6) of the moulded core are made of a pressure-resistant foam material.

10. The rotor blade of claim 1, characterised in that the elements (2, 4, 6) of the moulded core are in the form of hollow bodies.

11. The rotor blade of claim 1, characterised in that the hollow bodies are inflatable.

12. A method of making the rotor blades of any of the preceding claims, comprising the use of a winding machine with
- two opposed, aligned gripping heads (60, 62) provided with a synchronous drive,
- a support (68) for non-rotatably holding the fastening member (8) in one of the gripping heads,
- means (10, 74) for reversal of the fibres, held non-rotatably in the opposing gripping head,
- means (66, 92) for producing a tensile force axially of the gripping heads, and further comprising the processing steps of
- making a support wrapping (80) comprising only a few unidirectional fibre runs (82, 84), between the fastening member and the opposing reversal means,
- inserting the spar element (2) between the runs (82, 84) of the support wrapping,
- applying a tensile stress to the fibres of the support wrapping, of a magnitude such that the spar element is held by the runs of the support wrapping without drooping.
- applying further wrapping runs to complete the unidirectional fibre wrapping (24),
- applying a cross-wrapping (26) to the unidirectional fibre wrapping (24) with rotation of the gripping heads,
- attaching the front and rear profile elements (4, 6),
- applying an external cross-wrapping (28) with rotation of the gripping heads,
- releasing the wrapped rotor blade and lowering it into a first rigid part (88) of a mould defining the profile of the finished blade,
- closing a mould with a second rigid part,
- pressing the rotor blade between the parts of the mould and
- curing the blade in the mould.

13. The method of claim 12, characterised in that when the tensile stress has been applied to the support wrapping (80) of unidirectional fibres and the spar element (2) has been inserted between the runs (82, 84) of the support wrapping, a first internal cross-wrapping is applied to the support wrapping.

14. The method of claim 12, characterised by the use of a wrapping shoulder (74) located across the axis of rotation (56, 58) as a reversal means.

15. The method of claim 12, characterised by the use of a winding cap as a reversal means.

16. The method of claim 12, characterised by the use of a metallic insert member (10) to be tied into the rotor blade at the tip of the blade, as a reversal means.

17. The method of claim 12, characterised in that the distance between the fastening member (8) in one gripping head (60) and the reversal means in the other gripping head (62) is set so that it is greater than the length of the spar element (2).

18. The method of claim 12, characterised in that a fastening flange (30) with fastening pins (32) axially parallel with the spar axis (42) is used as a fastening member, and the unidirectional fibres are wrapped over the fastening flange and reversed about the fastening pins.

## Revendications

1. Pale de rotor pour éoliennes, réalisée en résines synthétiques renforcées par fibres, comprenant
- un corps formé de plusieurs parties constituées par un longeron central (2), un élément profilé avant et un élément profilé arrière (4, 6), rattachés au longeron,
- une nappe de fibres unidirectionnelles (24), montée sur la face supérieure et la face inférieure dans le sens de l'axe du longeron, dans laquelle au moins une partie des fibres unidirectionnelles s'étend sur toute la longueur de la pale du rotor,
- un élément de fixation métallique (8) pour la pale du rotor, disposé au pied de la pale du rotor, autour duquel s'enroulent les fibres unidirectionnelles de telle sorte que le longeron est relié à l'élément de fixation par l'enroulement des fibres unidirectionnelles, de manière à résister à la flexion,
- une nappe de fibres croisées (26) enroulées autour de la nappe de fibres unidirectionnelles (24),
- une nappe de fibres croisées (28), formant la coque de la pale du rotor, qui s'enroulent autour de l'ensemble du corps de la pale comprenant le longeron (2) et les éléments profilés avant et arrière (4, 6), rattachés à ce dernier.

2. Pale de rotor selon la revendication 1, caractérisée en ce qu'une première nappe (84), formée par un petit nombre de fibres unidirectionnelles, est posée sur le longeron (2) du corps de la pale, lesdites fibres s'étendant sur toute la longueur du longeron, et en ce qu'une nappe interne de fibres croisées est posée sur cette première nappe, les fibres unidirectionnelles (24) de l'autre nappe de fibres sont posées sur ladite nappe interne.

3. Pale de rotor selon la revendication 1, caractérisée en ce qu'un élément métallique rapporté (10) est intégré dans la pointe de la pale du rotor et en ce qu'au moins une partie de la nappe de fibres unidirectionnelles (24) est enroulée autour de l'élément de fixation (8), au pied de la pale du rotor, et autour de l'élément rapporté (10).

4. Pale de rotor selon la revendication 1, caractérisée en ce que le longeron (2) forme un étagement dans le sens longitudinal et présente au moins un épaulement transversal (3) et en ce qu'une partie de la nappe de fibres unidirectionnelles forme un enroulement passant autour de l'élément de fixation (8), monté au pied de la pale du rotor, et autour de l'épaulement transversal (3).

5. Pale de rotor selon la revendication 1, caractérisée en ce que l'élément de fixation (8) est muni d'au moins une forure (22), réalisée transversalement par rapport à l'axe du longeron, et un épaulement pour enroulement (16), présentant une symétrie de rotation avec l'axe de la forure.

6. Pale de rotor selon la revendication 1, caractérisée en ce qu'une collerette de fixation (30), disposée au pied de la pale du rotor, est munie de boulons de fixation (32), dont l'axe est parallèle à l'axe du longeron (42), autour desquels s'enroulent les fibres unidirectionnelles.

7. Pale de rotor selon la revendication 5, caractérisée en ce que la collerette de fixation (30) est formée par des épaulements arrondis (34), autour desquels s'enroulent des fibres unidirectionnelles et en ce qu'une bride de recouvrement (36) est prévue pour les nappes de fibres enroulées (38) sur la collerette de fixation (30).

8. Pale de rotor selon la revendication 1, caractérisée en ce que la surface de la pale est protégée par une feuille thermoplastique, qui est enliée sur toute sa surface à la résine synthétique.

9. Pale de rotor selon la revendication 1, caractérisée en ce que les éléments (2, 4, 6) du corps de la pale sont réalisés dans un matériau alvéolaire résistant à la pression.

10. Pale de rotor selon la revendication 1, caractérisée en ce que les éléments (2, 4, 6) du corps de la pale sont conçus comme des corps creux.

11. Pale de rotor selon la revendication 1, caractérisée en ce que les corps creux sont des corps gonflables.

12. Procédé de fabrication des pales de rotor selon l'une quelconque des revendications précédentes, dans lequel
on utilise une machine à enrouler, comprenant
- deux têtes de serrage (60, 62) situées face à face, alignées l'une par rapport à l'autre, lesquelles sont munies d'un moteur synchrone,
- un dispositif de serrage (68), destiné à bloquer l'élément de fixation (8) dans l'une des têtes de serrage, pour l'empêcher de suivre le mouvement de rotation,
- des organes (10, 74) bloqués de manière à ne pas tourner dans la tête de serrage opposée, utilisés comme organes de guidage des fibres,
- des organes (66, 92) destinés à produire une force de traction dans le sens de l'axe des têtes de serrage, et dans lequel on exécute, en outre, les étapes suivantes :
- fabrication d'un enroulement de maintien (80), formé d'un petit nombre d'échevettes de fibres unidirectionnelles (82, 84), réalisé entre l'élément de fixation et les organes de guidage opposés,
- montage du longeron (2) entre les échevettes (82, 84) de l'enroulement de maintien,
- application d'une force de traction sur les fibres de l'enroulement de maintien, d'une importance telle que le longeron est maintenu sans fléchissement par les échevettes de l'enroulement de maintien,
- mise en place d'autres enroulements formés d'échevettes de fibres, pour compléter la nappe de fibres unidirectionnelles (24),
- mise en place d'une nappe de fibres croisées (26) sur la nappe de fibres unidirectionnelles (24) par l'action de la rotation des têtes de serrage,
- montage des éléments profilés avant et arrière (4, 6),
- mise en place d'une autre nappe de fibres croisées (28) par l'action de la rotation des têtes de serrage,
- détachement de la pale de rotor formée par les enroulements de fibres et pose dans une première partie rigide (88) d'un moule, qui définit le profil de la pale de rotor finie,
- fermeture d'un moule par une deuxième partie rigide,
- moulage de la pale de rotor entre les deux parties du moule et
- durcissement de la pale de rotor dans le moule.

13. Procédé selon la revendication 12, caractérisé en ce que, après l'application de la force de traction sur l'enroulement de maintien (80), formé de fibres unidirectionnelles, et le montage du longeron (2) entre les échevettes (82, 84) de l'enroulement de maintien, une première nappe interne de fibres croisées est posée sur l'enroulement de maintien.

14. Procédé selon la revendication 12, caractérisé par un épaulement pour enroulement (74), utilisé comme organe de guidage, situé transversalement par rapport à l'axe de rotation (56, 58).

15. Procédé selon la revendication 12, caractérisé par une couronne d'enroulement, utilisée comme organe de guidage.

16. Procédé selon la revendication 12, caractérisé par un élément métallique rapporté (10), utilisé comme organe de guidage à intégrer dans la pointe de la pale du rotor.

17. Procédé selon la revendication 12, caractérisé en ce que la distance entre l'élément de fixation (8) dans l'une des têtes de serrage (60) et les organes de guidage dans l'autre tête de serrage (62) est supérieure à la longueur du longeron (2).

18. Procédé selon la revendication 12, caractérisé en ce que l'élément de fixation utilisé est une collerette de fixation (30) munie de boulons de fixation (32), dont l'axe est parallèle à l'axe du longeron (42), et les fibres unidirectionnelles s'enroulent autour de la collerette de fixation et sont déviées autour des boulons de fixation.
